# DEMANDE DE BREVET EUROPEEN

(11) **EP 4 043 270 A1**
(43) Date de publication de la demande: **17.08.2022**
(21) Numéro de dépôt: 22155638.4
(22) Date de dépôt: 08.02.2022
(51) Int. Cl.: B60L 7/08, B60L 7/18, B60L 7/26, B60L 58/22, B65G 1/04, B65G 54/02

(54) **SYSTÈME D' ALIMENTATION ÉLECTRIQUE, PROCÉDÉ ET PROGRAMME D' ORDINATEUR ASSOCIÉS**

(30) Priorité: 10.02.2021 FR 2101247
(71) Demandeur: ALSTOM Holdings, 93400 Saint-Ouen-sur-Seine (FR)
(72) Inventeur: BELLOMO, Jean-Philippe, 65000 Tarbes (FR); DROUEN, Laurent, 65000 Tarbes (FR); ZORZYNSKI, David, 65690 Montignac (FR)
(74) Mandataire: Lavoix

(57) **Abrégé**

Ce système d'alimentation électrique (10) comprend :
- un ensemble de batterie(s) de puissance (1) et un ensemble de batterie(s) d'énergie (2), tels que l'ensemble de batterie(s) de puissance (1) présente une densité de puissance plus élevée que celle de l'ensemble de batterie d'énergie (2) et l'ensemble de batterie(s) d'énergie (2) présente une densité d'énergie plus élevée que celle de l'ensemble de batterie(s) de puissance (1) ;
- un bloc (8, 3, 6) de contrôle adapté pour piloter la répartition d'énergie entre l'ensemble de batterie(s) de puissance (1) et l'ensemble de batterie(s) d'énergie.

Le bloc de contrôle est adapté pour, si la puissance courante P à fournir par le système d'alimentation électrique est supérieure à P_{maxEnergie_décharge}, limiter la partie de puissance délivrée par l'ensemble de batterie(s) d'énergie (2) à P_{maxEnergie_décharge} et faire délivrer, par l'ensemble de batterie(s) de puissance (1), le solde de puissance, P - P_{maxEnergie_décharge}.

## Description

La présente invention concerne le domaine des systèmes d'alimentation comportant des batteries. De tels systèmes d'alimentation sont utilisés notamment pour alimenter les trains sans caténaire. Toutefois, la quantité d'énergie nécessaire est importante pour des distances longues en autonomie, de l'ordre de 500 kWh pour 80 km d'autonomie. Les batteries utilisées sont généralement des batteries de puissance, qui sont lourdes et coûteuses. Comme les batteries ne peuvent pas être déchargées chaque jour pour respecter leur durée de vie, le système d'alimentation doit être surdimensionné, d'un facteur deux environ, augmentant le poids et le prix, ou alors contraignant à réduire la distance en autonomie.

Il existe donc un besoin de disposer d'un système d'alimentation permettant d'augmenter l'autonomie des engins alimentés tout en réduisant l'encombrement et le poids du système d'alimentation.

A cet effet, suivant un premier aspect, l'invention propose un système d'alimentation électrique comprenant :
- un ensemble de batterie(s) de puissance et un ensemble de batterie(s) d'énergie disposés en parallèle, tels que l'ensemble de batterie(s) de puissance présente une densité de puissance plus élevée que celle de l'ensemble de batterie d'énergie et l'ensemble de batterie(s) d'énergie présente une densité d'énergie plus élevée que celle de l'ensemble de batterie(s) de puissance ;
- un bloc de contrôle adapté pour piloter la répartition d'énergie entre l'ensemble de batterie(s) de puissance et l'ensemble de batterie(s) d'énergie ;
ledit système d'alimentation étant caractérisé en ce que le bloc de contrôle est adapté pour, si la puissance courante P à fournir par le système d'alimentation électrique est supérieure à P_{maxEnergie_décharge}, où P_{maxEnergie_décharge} est la valeur de la puissance maximale délivrable par l'ensemble de batterie(s) d'énergie, limiter la partie de puissance délivrée par l'ensemble de batterie(s) d'énergie à P_{maxEnergie_décharge} et faire délivrer, par l'ensemble de batterie(s) de puissance, le solde de puissance, P - P_{maxEnergie_décharge}.

L'invention permet ainsi d'augmenter l'autonomie des engins alimentés tout en réduisant l'encombrement et le poids du système d'alimentation.

Dans des modes de réalisation, un système d'alimentation suivant l'invention comporte en outre une ou plusieurs des caractéristiques suivantes :
- le bloc de contrôle est adapté pour, si la puissance courante P à fournir par le système d'alimentation électrique est inférieure à P_{maxEnergie_décharge}, faire délivrer, par l'ensemble de batterie(s) d'énergie, ladite puissance P ;
- le bloc de contrôle est adapté pour, si la puissance de freinage électrique courante P à stocker par le système d'alimentation électrique est inférieure à P_{maxPuissance_charge}, où P_{maxPuissance_charge} est la valeur de la puissance maximale recevable par l'ensemble de batterie(s) de puissance, faire stocker par l'ensemble de batterie(s) de puissance, ladite puissance P ;
- le bloc de contrôle est adapté pour, si la puissance de freinage électrique courante P à stocker par le système d'alimentation électrique est supérieure à la somme de P_{maxPuissance_charge} et de P_{maxEnergie_charge}, où P_{maxPuissance_charge} est la valeur de la puissance maximale recevable par l'ensemble de batterie(s) de puissance et P_{maxEnergie_charge} est la valeur de la puissance maximale recevable par l'ensemble de batterie(s) d'énergie, limiter la puissance dans les ensembles de batterie(s) à un seuil maximum, l'excédent de puissance de freinage nécessaire étant assurée mécaniquement et/ou thermiquement ;
- le bloc de contrôle est adapté pour, si la puissance de freinage électrique courante P à stocker par le système d'alimentation électrique est inférieure à la somme de P_{maxEnergie_charge} et de P_{maxPuissance_charge}, et est supérieure à P_{maxPuissance_charge}, où P_{maxPuissance_charge} est la valeur de la puissance maximale recevable par l'ensemble de batterie(s) de puissance et P_{maxEnergie_charge} est la valeur de la puissance maximale recevable par l'ensemble de batterie(s) d'énergie, faire stocker le produit de k et de P, k.P, par l'ensemble de batterie(s) d'énergie, avec k réel prédéfini compris dans ]0 , 1[, et (1-k).P par l'ensemble de batterie(s) de puissance ;
- k est égal à 0,5 ; et
- le système est adapté pour être transporté sur un support solidaire d'un véhicule ferroviaire et adapté pour alimenter ledit véhicule ferroviaire lorsqu'il est en situation de traction et pour récupérer l'énergie issue du freinage lorsqu'il est en situation de freinage.

Suivant un deuxième aspect, la présente invention propose un procédé d'alimentation électrique mis en œuvre par un système d'alimentation électrique comprenant :
- un ensemble de batterie(s) de puissance et un ensemble de batterie(s) d'énergie disposés en parallèle, tels que l'ensemble de batterie(s) de puissance présente une densité de puissance plus élevée que celle de l'ensemble de batterie d'énergie et l'ensemble de batterie(s) d'énergie présente une densité d'énergie plus élevée que celle de l'ensemble de batterie(s) de puissance ;
- un bloc de contrôle adapté pour piloter la répartition d'énergie entre l'ensemble de batterie(s) de puissance et l'ensemble de batterie(s) d'énergie ;
ledit procédé d'alimentation électrique étant caractérisé en ce que si la puissance courante P à fournir par le système d'alimentation électrique est supérieure à P_{maxEnergie_décharge}, où P_{maxEnergie_décharge} est la valeur de la puissance maximale délivrable par l'ensemble de batterie(s) d'énergie, le bloc de contrôle limite la partie de puissance délivrée par l'ensemble de batterie(s) d'énergie à P_{maxEnergie_décharge} et fait délivrer, par l'ensemble de batterie(s) de puissance, le solde de puissance, P - P_{maxEnergie_décharge}.

Dans des modes de réalisation, un procédé d'alimentation électrique suivant l'invention comporte en outre une ou plusieurs des caractéristiques suivantes :
- si la puissance courante P à fournir par le système d'alimentation électrique est inférieure à P_{maxEnergie_décharge}, le bloc de contrôle fait délivrer, par l'ensemble de batterie(s) d'énergie, ladite puissance P ;
- si la puissance de freinage électrique courante P à stocker par le système d'alimentation électrique est inférieure à P_{maxPuissance_charge}, où P_{maxPuissance_charge} est la valeur de la puissance maximale recevable par l'ensemble de batterie(s) de puissance, le bloc de contrôle fait stocker par l'ensemble de batterie(s) de puissance, ladite puissance P ;
- si la puissance de freinage électrique courante P à stocker par le système d'alimentation électrique est supérieure à la somme de P_{maxPuissance_charge} et de P_{maxEnergie_charge}, où P_{maxPuissance_charge} est la valeur de la puissance maximale recevable par l'ensemble de batterie(s) de puissance et P_{maxEnergie_charge} est la valeur de la puissance maximale recevable par l'ensemble de batterie(s) d'énergie, le bloc de contrôle limite la puissance dans les ensembles de batterie(s) à un seuil maximum, l'excédent de puissance de freinage nécessaire étant assurée mécaniquement et/ou thermiquement ;
- si la puissance de freinage électrique courante P à stocker par le système d'alimentation électrique est inférieure à la somme de P_{maxEnergie_charge} et de P_{maxPuissance_charge} et est supérieure à P_{maxPuissance_charge}, où P_{maxPuissance_charge} est la valeur de la puissance maximale recevable par l'ensemble de batterie(s) de puissance et où P_{maxEnergie_charge} est la valeur de la puissance maximale recevable par l'ensemble de batterie(s) d'énergie, le bloc de contrôle fait stocker le produit de k et de P, k.P, par l'ensemble de batterie(s) d'énergie, avec k réel prédéfini compris dans ]0 , 1[, et (1-k).P par l'ensemble de batterie(s) de puissance ;
- k est égal à 0,5 ; et
- le système d'alimentation électrique est adapté pour être transporté sur un support solidaire d'un véhicule ferroviaire, le système alimentant ledit véhicule ferroviaire lorsqu'il est en situation de traction et récupérant l'énergie issue du freinage lorsqu'il est en situation de freinage.

Suivant un troisième aspect, la présente invention propose un programme d'ordinateur comportant des instructions logicielles qui, lorsqu'elles sont exécutées par un ordinateur, mettent en œuvre un procédé tel que défini ci-dessus.

Ces caractéristiques et avantages de l'invention apparaîtront à la lecture de la description qui va suivre, donnée uniquement à titre d'exemple, et faite en référence aux dessins annexés, sur lesquels :
*[**Fig 1**]* la figure 1 représente une vue schématique d'un système d'alimentation dans un mode de réalisation de l'invention ;
*[**Fig 2**]* la figure 2 est un organigramme d'étapes mises en œuvre dans un mode de réalisation de l'invention.

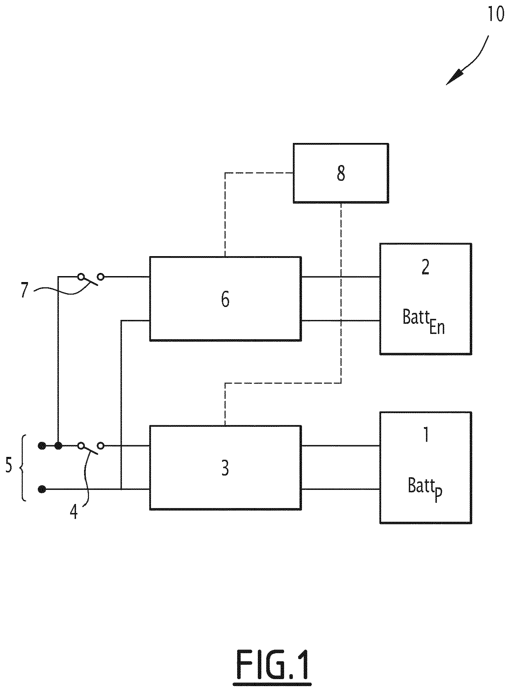

La figure 1 représente un système d'alimentation 10 dans un mode de réalisation de l'invention.

Le système d'alimentation 10 selon l'invention est, dans le mode de réalisation considéré, embarqué dans un tender, c'est-à-dire dans une voiture dédiée à la réception du système d'alimentation et généralement positionnée juste derrière une motrice à alimenter en énergie électrique. Dans d'autres modes de réalisation, le système 10 est par exemple intégré dans des coffres en toiture de train, ou à l'intérieur du train ou sous le plancher du train...

On notera que l'invention est également applicable à des trains à motorisation répartie (sans motrice).

Le système d'alimentation 10 est adapté, dans un premier mode de fonctionnement, pour délivrer, de la façon décrite plus loin, de l'énergie électrique au train, qui est utilisée par un ensemble d'équipements électriques 20 (le moteur de traction de la locomotive du train, les équipements auxiliaires ...).

Le système d'alimentation 10 est adapté, dans un second mode de fonctionnement, pour recevoir de l'énergie électrique et pour stocker cette dernière, de la façon décrite plus loin.

Le système d'alimentation 10 comporte, dans le cas considéré, un ensemble de batterie(s) de puissance Battp 1, un ensemble de batterie(s) d'énergie 2, deux convertisseurs DC/DC 3 et 6 et un dispositif électronique de contrôle 8.

L'ensemble de batterie(s) de puissance 1 comporte une batterie de puissance ou plusieurs branches de batteries de puissance, disposées en parallèle. Chaque branche de batterie présente à ces bornes la tension nominale de la batterie. Dans la majorité des cas, cette branche électrique est constituée par un pack (coffre mécanique déposable en ligne), batterie unique, mais dans certains cas, la branche batterie pourra être constituée de packs mis en série. Par la suite, on parlera de la batterie de puissance 1 pour désigner l'ensemble de batterie(s) de puissance.

L'ensemble de batterie(s) d'énergie Batt_{En} 2 comporte une batterie d'énergie ou plusieurs batteries d'énergie, disposées en parallèle. Chaque branche de batterie présente à ces bornes la tension nominale de la batterie. Dans la majorité des cas, cette branche électrique est constituée par un pack (coffre mécanique déposable en ligne), batterie unique, mais dans certains cas la branche batterie pourra être constituée de packs mis en série. Par la suite, on parlera de la batterie d'énergie 2 pour désigner l'ensemble de batterie(s) d'énergie 2.

Comme il est connu, une batterie est un ensemble d'accumulateurs électriques rechargeables reliés entre eux de façon à créer un générateur électrique de tension et de capacité désirée.

La batterie d'accumulateurs permet de stocker l'énergie électrique sous forme chimique et de la restituer sous forme de courant continu, de manière contrôlée.

La batterie d'énergie Batt_{En} 2 a une densité d'énergie (i.e. une énergie par unité de poids ou de taille, exprimée ainsi en kWh/kg ou kWh/l) plus élevée que la batterie de puissance Batt_{P} 1, par exemple plus élevée de 50% au moins. Par exemple, la batterie d'énergie Batt_{En} 2 est une batterie constituée de cellule de type Lithium ion NMC caractérisée par une densité d'énergie de 200 Wh/kg. La batterie de puissance Battp 1 est une batterie constituée de cellule de type Titanate-Lithium d'environ 70 Wh/kg.

La batterie de puissance Battp 1 a une densité de puissance (i.e. une puissance électrique par unité de poids ou de taille, exprimée ainsi en kW/kg ou kW/I) plus élevée que la batterie d'énergie Batt_{En} 2, par exemple plus élevée de 100% au moins. Une batterie d'énergie est capable de délivrer environ 170kWmax par Tonne alors qu'une batterie de puissance se situe à 400kW par tonne. Ce ratio se retrouve aussi dans l'autre sens pour l'énergie, à savoir la densité d'énergie d'une batterie d'énergie est autour de 130kWh par tonne alors que pour une batterie de puissance on est seulement à 50kWh par tonne.

La batterie de puissance Battp 1 est connectée au convertisseur DC/ DC 3.

La batterie d'énergie Batt_{En} 2 est connectée au convertisseur DC/ DC 6.

La chaîne d'alimentation/stockage comportant le convertisseur DC/DC 3 et la batterie de puissance Battp 1 est disposée en parallèle de la chaîne d'alimentation/stockage comportant le convertisseur DC/DC 6 et la batterie d'énergie Batt_{En} 2.

L'entrée du convertisseur DC/DC 3 est connecté aux équipements consommateurs 5 dans le train, via un bus Traction (pour l'équipement consommateur moteur du train) ou un bus Auxiliaires (pour les équipements consommateurs auxiliaires du type climatisation, chauffage etc.). Les échanges d'énergie électrique entre le train et le système d'alimentation 10 se font via ces bus, comportant chacun un câble d'alimentation haute tension (typiquement entre 700 et 3000 V) qui joue le rôle de « caténaire » locale et au travers de contacteurs d'isolements 4, 7.

Le contacteur d'isolement 4 est adapté pour isoler, lorsqu'il est commandé en ouverture, la chaîne comportant le convertisseur DC/DC 3 et la batterie de puissance Battp 1, le contacteur d'isolement 7 est adapté pour isoler, lorsqu'il est commandé en ouverture, la chaîne comportant le convertisseur DC/DC 6 et la batterie d'énergie Batt_{En} 2.

Le convertisseur DC / DC 3 via son logiciel de pilotage est adapté pour piloter la charge et la décharge de la batterie de puissance Battp 1, i.e. en moduler la puissance de charge et décharge.

Le convertisseur DC / DC 6 via son logiciel de pilotage est adapté pour piloter la charge et la décharge de la batterie d'énergie Batt_{En} 2.

Le dispositif électronique de contrôle 8 est adapté pour définir la répartition de puissance des 2 sources d'énergie en définissant le fonctionnement des convertisseurs DC/DC 3 et DC/DC 6, et ainsi pour piloter la charge et décharge de chacune des batteries de puissance Battp 1 et d'énergie Batt_{En} 2.

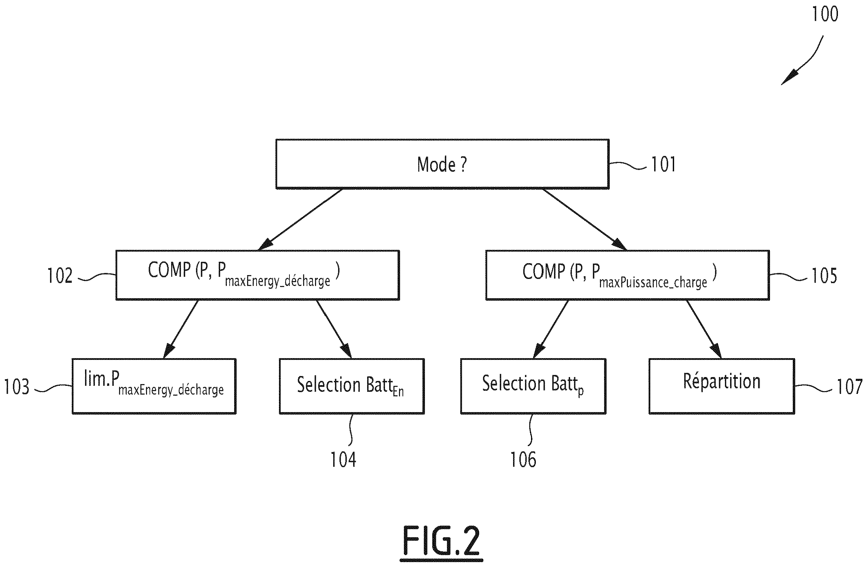

Dans le mode de réalisation considéré, le dispositif électronique de contrôle 8 comprend une mémoire et un processeur (non représentés) tels que la mémoire comporte des instructions logicielles, qui, lorsqu'elles sont exécutées sur le processeur, mettent en œuvre les étapes décrites ci-dessous en référence à la figure 2 et incombant au dispositif de contrôle 8.

Sur la figure 2, l'ensemble 100 des étapes d'un procédé d'alimentation électrique dans un mode de réalisation de l'invention est décrit.

Le dispositif de contrôle 8 détermine la répartition d'énergie de la façon décrite en figure 2, puis pilote les deux convertisseurs DC/DC 3 et 6 pour mettre en œuvre cette répartition d'énergie, avec des consignes de courant respectives pour effectuer cette répartition d'énergie.

Dans une étape 101, le dispositif de contrôle 8 identifie si le mode de fonctionnement est un mode de traction (i.e. un mode où de l'énergie électrique doit être fournie au train par le système d'alimentation 10) ou un mode de freinage (de l'énergie électrique, consécutive à un freinage du train, est fournie au système d'alimentation 10 en provenance du train).

Si le mode de fonctionnement identifié est le mode de traction, dans une étape 102, le dispositif de contrôle 8 détermine la valeur courante P de la puissance requise par le train au système d'alimentation 10 issue du manipulateur de conduite puis compare cette puissance P à une valeur P_{maxEnergie_décharge}.

La valeur P_{maxEnergie_décharge} est la valeur de puissance maximale délivrable par la batterie d'énergie Batt_{En} 2 déterminée par la capacité de la batterie installée et les conditions instantanées de la batterie (état de charge, température des cellule). C'est donc une valeur que le système de gestion de batterie, ou BMS (de l'anglais « *Battery Management System* »), calcule en permanence et non pas une valeur fixe (sa plage de variation est par contre fixe).

En cas de forte puissance requise, i.e. si P > P_{maxEnergie_décharge}, dans une étape 103, le dispositif de contrôle 8 établit les consignes des convertisseurs 3 et 6 de manière à ce que la puissance fournie P1 par la batterie énergie Batt_{En} 2 soit limitée à P_{maxEnergie_décharge} (P1 = P_{maxEnergie_décharge}), et que le reste P2 de la puissance requise (P2 = P - P1) soit fournie par la batterie de puissance Battp 1.

Comme on installe 2 batteries, la batterie de puissance a sa puissance limitée du fait de son volume/masse limité. Elle ne peut donc pas fournir toute seule la puissance maximale totale. La batterie énergie étant déjà présente assure donc l'autre partie de la puissance totale.

En cas de faible puissance requise, i.e. si P ≤ P_{maxEnergie_décharge}, dans une étape 104, le dispositif de contrôle pilote les convertisseurs 3 et 6 de manière à ce que toute la puissance requise P soit fournie par la batterie d'énergie Batt_{En} 2.

L'intérêt de cette disposition plutôt que de faire délivrer le maximum par la batterie de puissance Battp 1 est que, compte tenu des différences de densité d'énergie entre une batterie énergie Batt_{En} et une batterie de puissance Batt_{P}, on est souvent incapable de satisfaire les besoins d'énergie sur un parcours par une batterie de puissance (trop lourd, trop volumineux).

Si le mode de fonctionnement identifié est le mode de freinage, dans une étape 105, le dispositif de contrôle 8 détermine la valeur courante P de la puissance électrique provenant du freinage par le train et délivrée au système d'alimentation 10 issue du manipulateur de conduite puis compare cette puissance P à une valeur P_{maxPuissance_charge}, où P_{maxPuissance_charge} est la valeur de la puissance maximale recevable par l'ensemble de batterie(s) de puissance 1.

En cas de faible puissance de freinage délivrée, i.e. si P_{freinage} ≤ P_{maxPuissance_charge} (où P_{freinage} est la puissance de freinage délivrée), dans une étape 106, le dispositif de contrôle 8 établi les consignes des convertisseurs 3 et 6 de manière à ce que toute la puissance de freinage délivrée P soit fournie à la batterie de puissance Batt_{P} 1 pour stockage par cette dernière.

L'intérêt est de recharger au maximum la batterie de puissance qui va être sollicitée à la prochaine phase traction (décharge) et qui est de petite capacité. Par ailleurs ce cycle de recharge est moins impactant en terme de durée de vie sur la batterie de puissance que sur la batterie énergie qui est moins « cyclable » que la batterie de puissance.

En cas de puissance de freinage moyenne, i.e. si (P_{maxEnergie_charge}+ P_{maxPuissance_charge})> P > P_{maxPuissance_charge} (où P_{maxEnergie_charge} est la valeur de la puissance maximale recevable par l'ensemble de batterie(s) d'énergie 2), dans une étape 107, le dispositif de contrôle 8 établit les consignes pour les convertisseurs 3 et 6 de manière à ce que la puissance soit répartie entre les 2 types de batterie:
- un pourcentage de la puissance fournie, i.e. le produit d'un indice k et de la puissance fournie P, k.P est fourni à la batterie énergie Batt_{En} 2 (avec k réel compris dans ]0,1 [; par exemple, dans le cas considéré, k = 0,5 ) ;
- le reste de la puissance fournie, i.e. (1-k).P est délivrée à la batterie de puissance Battp 1.

L'intérêt de cette disposition, est, dans ce cas où la puissance de freinage dépasse la puissance maximum de la batterie de puissance, d'envoyer l'excédent vers la batterie énergie.

En cas de puissance de freinage forte, i.e. si P > P_{maxPuissance_charge}+P_{maxEnergie_charge}, le dispositif de contrôle 8 pilote les convertisseurs 3 et 6 de manière à limiter la puissance dans les 2 batteries à un seuil maximum, par exemple égal à la somme de P_{maxPuissance_charge} et de P_{maxEnergie_charge}. L'excédent de puissance de freinage nécessaire est assurée mécaniquement et/ou thermiquement, par exemple par le frein mécanique et non plus le freinage électrique et/ou par dissipation thermique dans un rhéostat du véhicule.

Le bloc de contrôle 8, 3, 6, est adapté pour, si la puissance de freinage électrique courante P à stocker par le système d'alimentation électrique est supérieure à la somme de P_{maxPuissance_charge} et de P_{maxEnergie_charge}, où P_{maxPuissance_charge} est la valeur de la puissance maximale recevable par l'ensemble de batterie(s) de puissance 1 et P_{maxEnergie_charge} est la valeur de la puissance maximale recevable par l'ensemble de batterie(s) d'énergie 2, limiter la puissance dans les ensembles de batterie(s) 1, 2, à un seuil maximum, l'excédent de puissance de freinage nécessaire étant assurée mécaniquement et/ou thermiquement.

L'invention propose ainsi un système d'alimentation séparé en deux parties et pilotable comme décrit ci-dessus, ce qui fournit une solution de répartition entre les deux types de batterie en situation d'alimentation et de stockage permettant d'accroître le rapport distance d'autonomie sur encombrement du système d'alimentation.

Dans le système d'alimentation 10, la batterie de puissance Battp permet d'absorber les pics de puissance requis par le train, tandis que la batterie d'énergie Batt_{En} permet d'absorber les variations d'énergie auxiliaires demandées (liées par exemple à la variation de saison).

Comparativement à une solution de supercapacités combinées à une batterie, la proposition à deux types de batterie selon l'invention permet d'offrir des pics de puissance plus longs que ceux qui pourraient être offerts avec une supercapacité. La supercapacité est en général utilisée pour des temps de charge ou décharge de l'ordre de 30s à 1min, elle pourrait permettre à un train de démarrer, mais pas de franchir une pente qui nécessiterait une plus longue fourniture de puissance et donc plus d'énergie

Comparativement à une solution pile à combustible combinée à des supercapacités, on retrouve la même remarque pour la supercapacité qui, pour un train, présente le désavantage d'être limitée en énergie et donc de ne pas pouvoir offrir de la puissance sur une durée assez longue.

Pour cette même comparaison avec une solution comprenant une pile à combustible combinée à des supercapacités, la différence entre la pile à combustible et la batterie d'énergie est la taille du système qui est beaucoup plus petit et léger dans le cas de la batterie d'énergie qu'un système de pile à combustible incluant des réservoirs volumineux. La limite étant avec la batterie d'énergie, l'énergie stockable. On a aujourd'hui une limite de 80-100 km d'autonomie pour un système à batterie pure, là ou une solution par pile à combustible permet 400 à 1000km d'autonomie, dans la mesure ou la place pour l'intégration est disponible

Dans un autre mode de réalisation, le dispositif électronique de contrôle 8 est réalisé sous forme d'un composant logique programmable, tel qu'un FPGA (de l'anglais *Field Programmable Gate Array),* ou encore sous forme d'un circuit intégré dédié, tel qu'un ASIC (de l'anglais *Applications Specific Integrated Circuit).*

L'invention a été décrite ci-dessus en référence à une application ferroviaire de train, mais elle est applicable à toute situation où un système d'alimentation électrique et/ou de stockage électrique est adapté pour fournir et/ou stocker de l'énergie, par exemple de tramway ou encore le bus électrique.

## Revendications

1. Système d'alimentation électrique (10) comprenant :
- un ensemble de batterie(s) de puissance (1) et un ensemble de batterie(s) d'énergie (2) disposés en parallèle, tels que l'ensemble de batterie(s) de puissance (1) présente une densité de puissance plus élevée que celle de l'ensemble de batterie d'énergie (2) et l'ensemble de batterie(s) d'énergie (2) présente une densité d'énergie plus élevée que celle de l'ensemble de batterie(s) de puissance (1) ;
- un bloc (8, 3, 6) de contrôle adapté pour piloter la répartition d'énergie entre l'ensemble de batterie(s) de puissance (1) et l'ensemble de batterie(s) d'énergie ;
ledit système d'alimentation étant **caractérisé en ce que** le bloc de contrôle est adapté pour, si la puissance courante P à fournir par le système d'alimentation électrique est supérieure à P_{maxEnergie_décharge}, où P_{maxEnergie_décharge} est la valeur de la puissance maximale délivrable par l'ensemble de batterie(s) d'énergie (2), limiter la partie de puissance délivrée par l'ensemble de batterie(s) d'énergie (2) à P_{maxEnergie_décharge} et faire délivrer, par l'ensemble de batterie(s) de puissance (1), le solde de puissance, P - P_{maxEnergie_décharge}.

2. Système d'alimentation électrique (10) selon la revendication 1, dans lequel le bloc de contrôle (8, 3, 6) est adapté pour, si la puissance courante P à fournir par le système d'alimentation électrique est inférieure à P_{maxEnergie_décharge}, faire délivrer, par l'ensemble de batterie(s) d'énergie (2), ladite puissance P.

3. Système d'alimentation électrique (10) selon la revendication 1 ou 2, dans lequel le bloc de contrôle (8, 3, 6) est adapté pour, si la puissance de freinage électrique courante P à stocker par le système d'alimentation électrique est inférieure à P_{maxPuissance_charge}, où P_{maxPuissance_charge} est la valeur de la puissance maximale recevable par l'ensemble de batterie(s) de puissance (1), faire stocker par l'ensemble de batterie(s) de puissance (1), ladite puissance P.

4. Système d'alimentation électrique (10) selon l'une quelconque des revendications précédentes, dans lequel le bloc de contrôle (8, 3, 6) est adapté pour, si la puissance de freinage électrique courante P à stocker par le système d'alimentation électrique est supérieure à la somme de P_{maxPuissance_charge} et de P_{maxEnergie_charge}, où P_{maxPuissance_charge} est la valeur de la puissance maximale recevable par l'ensemble de batterie(s) de puissance (1) et P_{maxEnergie_charge} est la valeur de la puissance maximale recevable par l'ensemble de batterie(s) d'énergie (2), limiter la puissance dans les ensembles de batterie(s) (1, 2) à un seuil maximum, l'excédent de puissance de freinage nécessaire étant assurée mécaniquement et/ou thermiquement.

5. Système d'alimentation électrique (10) selon l'une des revendications précédentes, dans lequel le bloc de contrôle (8, 3, 6) est adapté pour, si la puissance de freinage électrique courante P à stocker par le système d'alimentation électrique est inférieure à la somme de P_{maxEnergie_charge} et de P_{maxPuissance_charge}, et est supérieure à P_{maxPuissance_charge}, où P_{maxPuissance_charge} est la valeur de la puissance maximale recevable par l'ensemble de batterie(s) de puissance (1) et P_{maxEnergie_charge} est la valeur de la puissance maximale recevable par l'ensemble de batterie(s) d'énergie (2), faire stocker le produit de k et de P, k.P, par l'ensemble de batterie(s) d'énergie (2), avec k réel prédéfini compris dans ]0 , 1[, et (1-k).P par l'ensemble de batterie(s) de puissance (1).

6. Système d'alimentation électrique (10) selon la revendication 5, dans lequel k est égal à 0,5.

7. Système d'alimentation électrique (10) selon l'une des revendications précédentes, adapté pour être transporté sur un support solidaire d'un véhicule ferroviaire et adapté pour alimenter ledit véhicule ferroviaire lorsqu'il est en situation de traction et pour récupérer l'énergie issue du freinage lorsqu'il est en situation de freinage.

8. Procédé d'alimentation électrique mis en œuvre par un système d'alimentation électrique (10) comprenant :
- un ensemble de batterie(s) de puissance (1) et un ensemble de batterie(s) d'énergie (2) disposés en parallèle, tels que l'ensemble de batterie(s) de puissance (1) présente une densité de puissance plus élevée que celle de l'ensemble de batterie d'énergie (2) et l'ensemble de batterie(s) d'énergie (2) présente une densité d'énergie plus élevée que celle de l'ensemble de batterie(s) de puissance (1) ;
- un bloc (8, 3, 6) de contrôle adapté pour piloter la répartition d'énergie entre l'ensemble de batterie(s) de puissance (1) et l'ensemble de batterie(s) d'énergie ;
ledit procédé d'alimentation électrique étant **caractérisé en ce que** si la puissance courante P à fournir par le système d'alimentation électrique est supérieure à P_{maxEnergie_décharge}, où P_{maxEnergie_décharge} est la valeur de la puissance maximale délivrable par l'ensemble de batterie(s) d'énergie (2), le bloc de contrôle limite la partie de puissance délivrée par l'ensemble de batterie(s) d'énergie (2) à P_{maxEnergie_décharge} et fait délivrer, par l'ensemble de batterie(s) de puissance (1), le solde de puissance, P - P_{maxEnergie_décharge}.

9. Procédé d'alimentation électrique selon la revendication 8, dans lequel si la puissance courante P à fournir par le système d'alimentation électrique est inférieure à P_{maxEnergie_décharge}, le bloc de contrôle (8, 3, 6) fait délivrer, par l'ensemble de batterie(s) d'énergie (2), ladite puissance P.

10. Programme d'ordinateur comportant des instructions logicielles qui, lorsqu'elles sont exécutées par un ordinateur, mettent en œuvre un procédé selon l'une quelconque des revendications 8 à 9.
